# EUROPEAN PATENT APPLICATION

(11) **EP 4 699 829 A1**
(43) Date of publication of application: **25.02.2026**
(21) Application number: 23933793.4
(22) Date of filing: 07.11.2023
(51) Int. Cl.: B60G 17/0165

(54) **VEHICLE BODY STABILITY CONTROL METHOD, AND CONTROLLER AND VEHICLE**

(30) Priority: 17.04.2023 CN 202310433457
(71) Applicant: BYD Company Limited, Shenzhen, Guangdong 518118 (CN)
(72) Inventor: LIAO, Yinsheng, Shenzhen, Guangdong 518118 (CN); LI, Hao, Shenzhen, Guangdong 518118 (CN); WANG, Shen, Shenzhen, Guangdong 518118 (CN); ZHANG, Xiuhe, Shenzhen, Guangdong 518118 (CN); ZHANG, Hua, Shenzhen, Guangdong 518118 (CN)
(74) Representative: Mathys & Squire
(86) International application number: PCT/CN2023/130164
(87) International publication number: WO 2024/216926

(57) **Abstract**

A vehicle body stability control method, a controller, and a vehicle relate to the field of vehicle control technologies. The vehicle body stability control method includes: obtaining vehicle body state information of a vehicle, and road surface information, the vehicle having an active suspension system; and controlling the active suspension system based on the vehicle body state information and the road surface information to stabilize the vehicle.

## Description

### CROSS REFERENCE TO RELATED APPLICATIONS

The present disclosure claims priority to Chinese Patent Application No. 202310433457.0, filed on April 17, 2023 and entitled "VEHICLE BODY STABILITY CONTROL METHOD, CONTROLLER, AND VEHICLE", which is incorporated herein by reference in its entirety.

### TECHNICAL FIELD

The present disclosure relates to the field of vehicle control technologies, and in particular, to a vehicle body stability control method, a controller, and a vehicle.

### BACKGROUND

During vehicle operation, stability control of a vehicle body is generally performed only based on operating parameter information of the vehicle, which results in poor vehicle body stability control issues.

### SUMMARY

A vehicle body stability control method, a controller, and a vehicle are provided to adjust a vehicle body to be always in a stable state and ensure smooth driving of the vehicle.

In a first aspect, the present disclosure provides a vehicle body stability control method, including: obtaining vehicle body state information of a vehicle, and road surface information, the vehicle having an active suspension system; and controlling the active suspension system based on the vehicle body state information and the road surface information to stabilize the vehicle.

In addition, the vehicle body stability control method in embodiments of the present disclosure may further have the following additional technical features:

According to an embodiment of the present disclosure, the step of controlling the active suspension system based on the vehicle body state information and the road surface information includes: determining a target electromagnetic suspension from the active suspension system based on the vehicle body state information and the road surface information, and obtaining a target control parameter corresponding to the target electromagnetic suspension; and controlling the corresponding target electromagnetic suspension based on the target control parameter.

According to an embodiment of the present disclosure, the step of determining the target electromagnetic suspension from the active suspension system based on the vehicle body state information and the road surface information, and obtaining the target control parameter corresponding to the target electromagnetic suspension includes: determining the target electromagnetic suspension from the active suspension system based on the vehicle body state information; and determining the target control parameter corresponding to the target electromagnetic suspension based on the road surface information and the vehicle body state information.

According to an embodiment of the present disclosure, the step of determining the target control parameter corresponding to the target electromagnetic suspension based on the road surface information and the vehicle body state information includes: obtaining a first control parameter based on the road surface information, and determining a second control parameter based on the vehicle body state information; and obtaining the target control parameter based on the first control parameter and the second control parameter.

According to an embodiment of the present disclosure, the step of obtaining the first control parameter based on the road surface information includes: obtaining the first control parameter when it is determined that the vehicle is driving on an uneven road surface based on the road surface information, the first control parameter representing that the vehicle body of the vehicle is raised to a first preset height by using the active suspension system; and obtaining the first control parameter when it is determined that the vehicle is driving on a flat road surface based on the road surface information, the first control parameter representing that the vehicle body of the vehicle is lowered to a second preset height by using the active suspension system, wherein the first preset height is greater than the second preset height.

According to an embodiment of the present disclosure, the step of determining the second control parameter based on the vehicle body state information includes: obtaining a first target threshold corresponding to a vehicle speed, the vehicle body state information including the vehicle speed and an accelerator pedal signal; obtaining a first change amount based on the accelerator pedal signal; and obtaining the second control parameter when the first change amount is greater than the first target threshold, the second control parameter representing lowering a height of a front-wheel electromagnetic suspension and/or raising a height of a rear-wheel electromagnetic suspension to avoid lifting up during acceleration, wherein the active suspension system includes the front-wheel electromagnetic suspension and the rear-wheel electromagnetic suspension.

According to an embodiment of the present disclosure, the step of determining the second control parameter based on the vehicle body state information includes: obtaining a second target threshold corresponding to a vehicle speed, the vehicle body state information including the vehicle speed and a brake pedal signal; obtaining a second change amount based on the brake pedal signal; and obtaining the second control parameter when the second change amount is greater than the second target threshold, the second control parameter representing raising a height of a front-wheel electromagnetic suspension and/or lowering a height of a rear-wheel electromagnetic suspension to avoid diving during braking, wherein the active suspension system includes the front-wheel electromagnetic suspension and the rear-wheel electromagnetic suspension.

According to an embodiment of the present disclosure, the step of determining the second control parameter based on the vehicle body state information includes: obtaining a third target threshold corresponding to a vehicle speed, the vehicle body state information including the vehicle speed and a turn signal; obtaining a third change amount based on the turn signal; and obtaining the second control parameter when the third change amount is greater than the third target threshold, the second control parameter representing lowering a height of an inner-side electromagnetic suspension and/or raising a height of an outer-side electromagnetic suspension to avoid vehicle body tilt during turning, wherein the active suspension system includes the inner-side electromagnetic suspension and the outer-side electromagnetic suspension.

According to an embodiment of the present disclosure, the second control parameter further represents that damping of an electromagnetic suspension is controlled.

In a second aspect, the present disclosure provides a controller, including a memory, a processor, and a computer program stored in the memory, wherein when the computer program is executed by the processor, the foregoing vehicle body stability control method is implemented.

In a third aspect, the present disclosure provides a vehicle, including: an active suspension system and the foregoing controller.

According to the vehicle body stability control method, the controller, and the vehicle in the embodiments of the present disclosure, a vehicle body posture is actively adjusted during vehicle driving by controlling the active suspension system, so that the vehicle can be always in an optimal driving state, ensuring stability of a driver's operation and improving passenger comfort.

### BRIEF DESCRIPTION OF DRAWINGS

FIG. 1 is a schematic flowchart of a vehicle body stability control method according to an embodiment of the present disclosure;
FIG. 2 is a schematic flowchart of controlling an active suspension system based on vehicle body state information and road surface information according to an embodiment of the present disclosure;
FIG. 3 is a schematic flowchart of determining a target electromagnetic suspension from an active suspension system based on vehicle body state information and road surface information and obtaining a target control parameter corresponding to the target electromagnetic suspension according to an embodiment of the present disclosure;
FIG. 4 is a schematic flowchart of determining a target control parameter corresponding to a target electromagnetic suspension based on road surface information and vehicle body state information according to an embodiment of the present disclosure;
FIG. 5 is a schematic flowchart of obtaining a first control parameter based on road surface information according to an embodiment of the present disclosure;
FIG. 6 is a schematic flowchart of determining a second control parameter based on vehicle body state information according to an embodiment of the present disclosure;
FIG. 7 is a schematic flowchart of determining a second control parameter based on vehicle body state information according to another embodiment of the present disclosure;
FIG. 8 is a schematic flowchart of determining a second control parameter based on vehicle body state information according to yet another embodiment of the present disclosure;
FIG. 9 is a block diagram of a structure of a controller according to an embodiment of the present disclosure;
FIG. 10 is a schematic diagram of a structure of a vehicle according to an embodiment of the present disclosure; and
FIG. 11 is a schematic diagram of a structure of a vehicle according to another embodiment of the present disclosure.

### DESCRIPTION OF EMBODIMENTS

The following describes in detail embodiments of the present disclosure. Examples of the embodiments are shown in the accompanying drawings, where same or similar reference numerals throughout represent same or similar elements or elements having same or similar functions. The embodiments described below with reference to the accompanying drawings are examples, and are intended to explain the present disclosure and shall not be construed as limitations on the present disclosure.

The following describes a vehicle body stability control method, a controller, and a vehicle in the embodiments of the present disclosure with reference to the accompanying drawings.

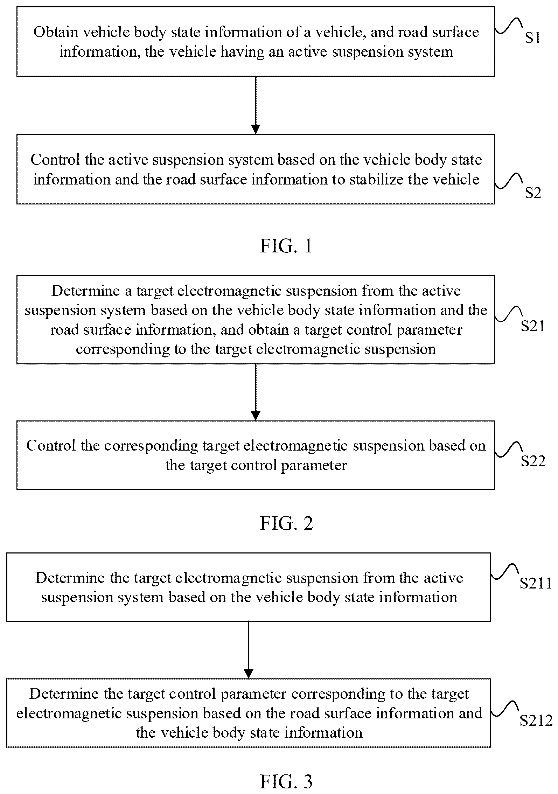

FIG. 1 is a schematic flowchart of a vehicle body stability control method according to an embodiment of the present disclosure.

As shown in FIG. 1, the vehicle body stability control method includes the following steps:
S1: obtaining vehicle body state information of a vehicle, and road surface information, the vehicle having an active suspension system.
   The vehicle body state information may include a vehicle driving speed, a steering wheel angle, and a total vehicle weight (including a vehicle body weight, a total weight of a driver and passengers, and a weight of cargo carried). Specifically, the vehicle body state information can be collected in real time by using a corresponding sensor. For the road surface information, an image of a road surface can be obtained in real time by using a high-definition camera mounted on the vehicle, and the obtained image is analyzed in real time by a vehicle central processing unit to obtain the road surface information.
S2: controlling the active suspension system based on the vehicle body state information and the road surface information to stabilize the vehicle.

Specifically, the vehicle central processing unit can analyze a current that needs to be output to the active suspension system in real time based on the vehicle body state information and the road surface information, and then adjust damping and a height of an electromagnetic suspension in real time, so that the vehicle body is always in a stable state.

According to the vehicle body stability control method in the embodiments of the present disclosure, a vehicle body posture is actively adjusted by controlling the active suspension system, so that the vehicle can be always in an optimal driving state, ensuring stability of a driver's operation and improving passenger comfort.

In some embodiments of the present disclosure, as shown in FIG. 2, the step of controlling the active suspension system based on the vehicle body state information and the road surface information includes the following steps:
S21: determining a target electromagnetic suspension from the active suspension system based on the vehicle body state information and the road surface information, and obtain a target control parameter corresponding to the target electromagnetic suspension.
S22: controlling the corresponding target electromagnetic suspension based on the target control parameter.

In this embodiment, a specific electromagnetic suspension whose height needs to be adjusted and a specific parameter for adjusting the height are determined through the vehicle body state information and the road surface information, thereby improving smoothness and stability of vehicle driving.

In some embodiments of the present disclosure, as shown in FIG. 3, the step of determining the target electromagnetic suspension from the active suspension system based on the vehicle body state information and the road surface information, and obtaining a target control parameter corresponding to the target electromagnetic suspension includes the following steps:
S211: determining the target electromagnetic suspension from the active suspension system based on the vehicle body state information.
S212: determining the target control parameter corresponding to the target electromagnetic suspension based on the road surface information and the vehicle body state information.

In this embodiment, by determining a specific electromagnetic suspension that needs to be adjusted based on a vehicle body state, and then determining a target control parameter for the electromagnetic suspension with reference to the road surface information, the electromagnetic suspension can be precisely adjusted to enable the vehicle to be always in the optimal driving state.

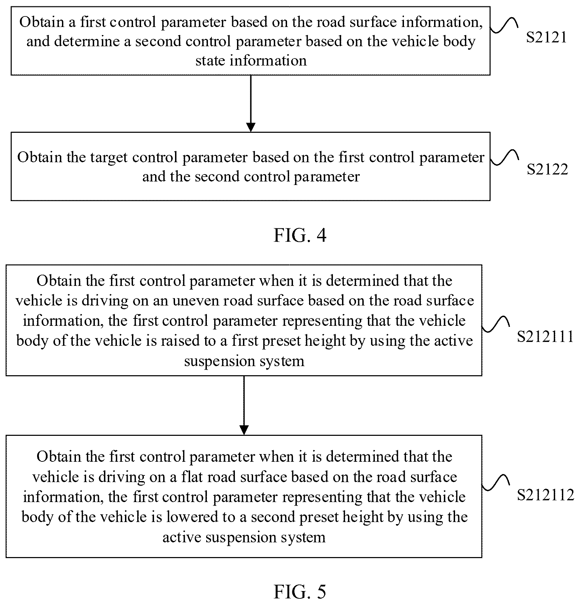

In some embodiments of the present disclosure, as shown in FIG. 4, the step of determining the target control parameter corresponding to the target electromagnetic suspension based on the road surface information and the vehicle body state information includes the following steps:
S2121: obtaining a first control parameter based on the road surface information, and determine a second control parameter based on the vehicle body state information.
S2122: obtaining the target control parameter based on the first control parameter and the second control parameter.

Specifically, the target control parameter for the corresponding target electromagnetic suspension is obtained based on the first control parameter and the second control parameter. The target control parameter may be a direct sum of the first control parameter and the second control parameter, or may be a weighted sum of the first control parameter and the second control parameter, depending on different vehicle models and vehicle conditions.

It should be noted that the corresponding target electromagnetic suspension may be all electromagnetic suspensions or some electromagnetic suspensions, which needs to be determined based on comprehensive analysis of the road surface information and the vehicle body state information.

In this embodiment, by obtaining the road surface information and the vehicle body state information, a more accurate target control parameter can be obtained, so as to avoid a case in which a target control parameter determined based on single information makes it impossible for the vehicle body to be adjusted to the optimal state, resulting in a poor riding experience of the driver and the passengers.

In some embodiments of the present disclosure, as shown in FIG. 5, the step of obtaining the first control parameter based on the road surface information includes the following steps:
S212111: obtaining the first control parameter when it is determined that the vehicle is driving on an uneven road surface based on the road surface information, the first control parameter representing that the vehicle body of the vehicle is raised to a first preset height by using the active suspension system.
S212112: obtaining the first control parameter when it is determined that the vehicle is driving on a flat road surface based on the road surface information, the first control parameter representing that the vehicle body of the vehicle is lowered to a second preset height by using the active suspension system, wherein the first preset height is greater than the second preset height.

It should be noted that the first control parameter may be raised or lowered as a whole, or partially raised or lowered. For example, when a vehicle passes through a pothole, an electromagnetic suspension corresponding to a tire passing through the pothole can be raised, and electromagnetic suspensions corresponding to the remaining tires are not adjusted.

In this embodiment, when it is detected that the vehicle is driving on an uneven road surface, adjustment of the electromagnetic suspension is beneficial for vehicle passage, and can prevent a high point of the uneven road surface from scraping a chassis. When it is detected that the vehicle is driving on a flat road surface, lowering the vehicle body is beneficial for improving stability of the driver's control, reducing wind resistance, and saving energy consumption of the vehicle.

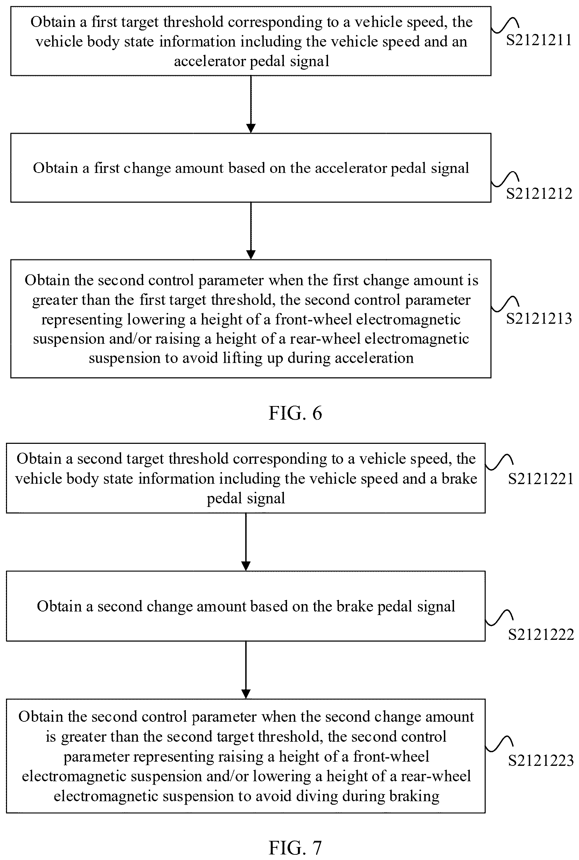

In some embodiments of the present disclosure, as shown in FIG. 6, the step of determining the second control parameter based on the vehicle body state information includes the following steps:
S2121211: obtaining a first target threshold corresponding to a vehicle speed, the vehicle body state information including the vehicle speed and an accelerator pedal signal.
S2121212: obtaining a first change amount based on the accelerator pedal signal.
S2121213: obtaining the second control parameter when the first change amount is greater than the first target threshold, the second control parameter representing lowering a height of a front-wheel electromagnetic suspension and/or raising a height of a rear-wheel electromagnetic suspension to avoid lifting up during acceleration, wherein the active suspension system includes the front-wheel electromagnetic suspension and the rear-wheel electromagnetic suspension.

For example, when the vehicle speed is less than a preset vehicle speed threshold, the first target threshold is 6 mm; and when the vehicle speed is not less than the preset vehicle speed threshold, the first target threshold is 4 mm.

If the first change amount is not greater than the first target threshold, the electromagnetic suspension is not adjusted.

In this embodiment, by obtaining an opening degree of an accelerator pedal in real time, it is possible to determine which tire's corresponding electromagnetic suspension needs to be adjusted, and then a specific height of the corresponding electromagnetic suspension is determined based on a vehicle speed. In this way, when the vehicle is accelerated to drive, the vehicle body state can be accurately controlled based on a driving state of the vehicle to prevent a "lifting -up" phenomenon during acceleration of the vehicle.

In some embodiments of the present disclosure, as shown in FIG. 7, the step of determining the second control parameter based on the vehicle body state information includes the following steps:
S2121221: obtaining a second target threshold corresponding to a vehicle speed, the vehicle body state information including the vehicle speed and a brake pedal signal.
S2121222: obtaining a second change amount based on the brake pedal signal.
S2121223: obtaining the second control parameter when the second change amount is greater than the second target threshold, the second control parameter representing raising a height of a front-wheel electromagnetic suspension and/or lowering a height of a rear-wheel electromagnetic suspension to avoid diving during braking, wherein the active suspension system includes the front-wheel electromagnetic suspension and the rear-wheel electromagnetic suspension.

If the second change amount is not greater than the second target threshold, the electromagnetic suspension is not adjusted.

In this embodiment, by obtaining an opening degree of a brake pedal in real time, it is possible to determine which tire's corresponding electromagnetic suspension needs to be adjusted, and then a specific height of the corresponding electromagnetic suspension is determined based on a vehicle speed. In this way, when a vehicle is decelerated to drive, the vehicle body state can be accurately controlled based on a driving state of the vehicle to prevent a "diving" phenomenon during deceleration of the vehicle.

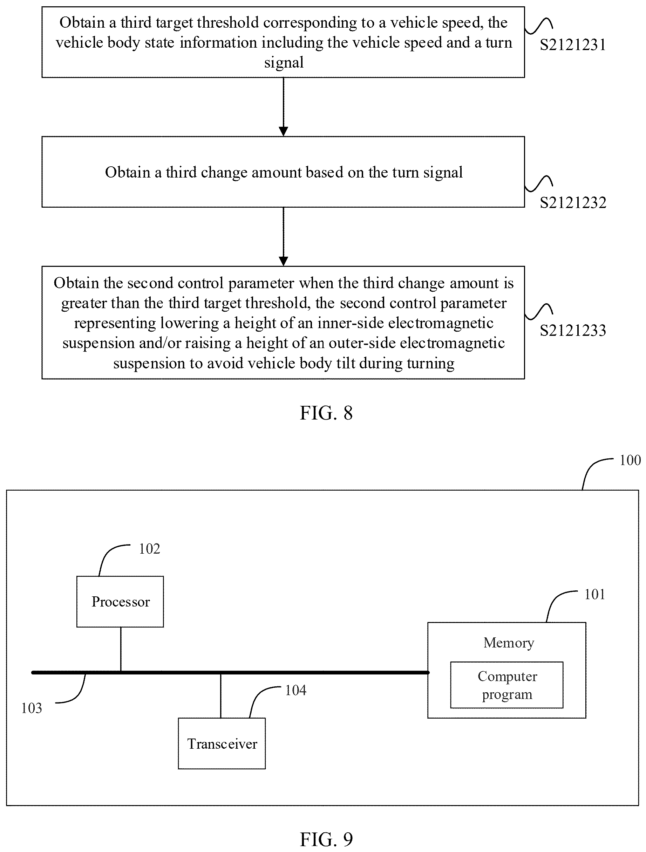

In some embodiments of the present disclosure, as shown in FIG. 8, the step of determining the second control parameter based on the vehicle body state information includes the following steps:
S2121231: obtaining a third target threshold corresponding to a vehicle speed, the vehicle body state information including the vehicle speed and a turn signal.
S2121232: obtaining a third change amount based on the turn signal.
S2121233: obtaining the second control parameter when the third change amount is greater than the third target threshold, the second control parameter representing lowering a height of an inner-side electromagnetic suspension and/or raising a height of an outer-side electromagnetic suspension to avoid vehicle body tilt during turning, wherein the active suspension system includes the inner-side electromagnetic suspension and the outer-side electromagnetic suspension.

If the third change amount is not greater than the third target threshold, the electromagnetic suspension is not adjusted.

In this embodiment, by obtaining a steering wheel angle in real time, it is possible to determine which tire's corresponding electromagnetic suspension needs to be adjusted, and then a specific height of the corresponding electromagnetic suspension is determined based on a vehicle speed. In this way, when a vehicle passes through a bend, the vehicle body state can be accurately controlled based on a turn signal to prevent the vehicle from experiencing vehicle body tilt when passing through the bend and affecting comfort of the driver and the passengers, and further prevent the vehicle from skidding, thereby ensuring safe driving of the vehicle.

It should be noted that an adjustment height of the target electromagnetic suspension is negatively correlated with a vehicle speed.

Specifically, the negative correlation may be a linear negative correlation or a non-linear negative correlation. The non-linear negative correlation includes a piecewise negative correlation. When the adjustment height of the target electromagnetic suspension is linearly negatively correlated with the vehicle speed, a correlation coefficient of the linear negative correlation can be calibrated through an experiment, and the calibrated correlation coefficient meets requirements of the driver and the passengers for optimal comfort.

In some embodiments of the present disclosure, the second control parameter further represents that damping of an electromagnetic suspension is controlled.

In this embodiment, by controlling the damping of the electromagnetic suspension, impact of vehicle vibration on the driver and the passengers can be reduced, thereby improving driving comfort.

As an example, the electromagnetic suspension includes a linear motor and a shock-absorbing spring, an upper portion of the linear motor is connected to the vehicle body, a lower portion of the linear motor is connected to the shock-absorbing spring, and a lower portion of the shock-absorbing spring is connected to a corresponding wheel through a frame. A control parameter for the electromagnetic suspension includes a current parameter, and a current generated based on the current parameter is used to control the linear motor in the electromagnetic suspension, so that the linear motor stretches or compresses the corresponding shock-absorbing spring. Therefore, the electromagnetic suspension can ensure that the vehicle is always operating in the optimal state at a reaction speed of milliseconds.

Corresponding to the foregoing embodiments, the present disclosure further provides a controller.

FIG. 9 is a block diagram of a structure of a controller according to an embodiment of the present disclosure.

As shown in FIG. 9, a controller 100 includes a memory 101, a processor 102, and a computer program stored in the memory 101. The memory 101 is connected to the processor 102, for example, through a bus 103. Optionally, the controller 100 may further include a transceiver 104. When the computer program is executed by the processor 102, the foregoing vehicle body stability control method is implemented. It should be noted that in actual application, a quantity of the transceivers 104 is not limited to one, and the structure of the controller 100 does not constitute a limitation on the embodiments of the present disclosure.

The processor 102 may be a CPU (Central Processing Unit), a general-purpose processor, a DSP (Digital Signal Processor), an ASIC (Application Specific Integrated Circuit), an FPGA (Field Programmable Gate Array), or another programmable logic device, a transistor logic device, a hardware component, or any combination thereof. The processor 102 can implement or execute various example logical blocks, modules, and circuits described in combination with the present disclosure. The processor 102 may further be a combination that implements a computing function, such as a combination including one or more microprocessors or a combination of a DSP and a microprocessor.

The bus 103 may include a channel for transmitting information between the foregoing components. The bus 103 may be a PCI (Peripheral Component Interconnect) bus, an EISA (Extended Industry Standard Architecture) bus, or the like. The bus 103 can be divided into an address bus, a data bus, a control bus, and the like. For ease of representation, only one thick line is used in FIG. 9 to represent the bus, but this does not indicate that there is only one bus or one type of bus.

The memory 101 is configured to store a computer program corresponding to the vehicle body stability control method in the foregoing embodiments of the present disclosure, and the computer program is controlled and executed by the processor 102. The processor 102 is configured to execute the computer program stored in the memory 101 to implement the content shown in the foregoing method embodiments.

The controller 100 includes but is not limited to a mobile terminal such as a PDA (personal digital assistant) or a PAD (tablet computer). The controller 100 shown in FIG. 9 is merely an example and shall not impose any limitation on the functions and scope of use of the embodiments of the present disclosure.

The controller in this embodiment of the present disclosure actively adjusts a vehicle body posture by controlling an active suspension system, so that the vehicle can be always in the optimal driving state, ensuring stability of the driver's operation and improving comfort of the passengers.

Corresponding to the foregoing embodiment, the present disclosure further provides a vehicle.

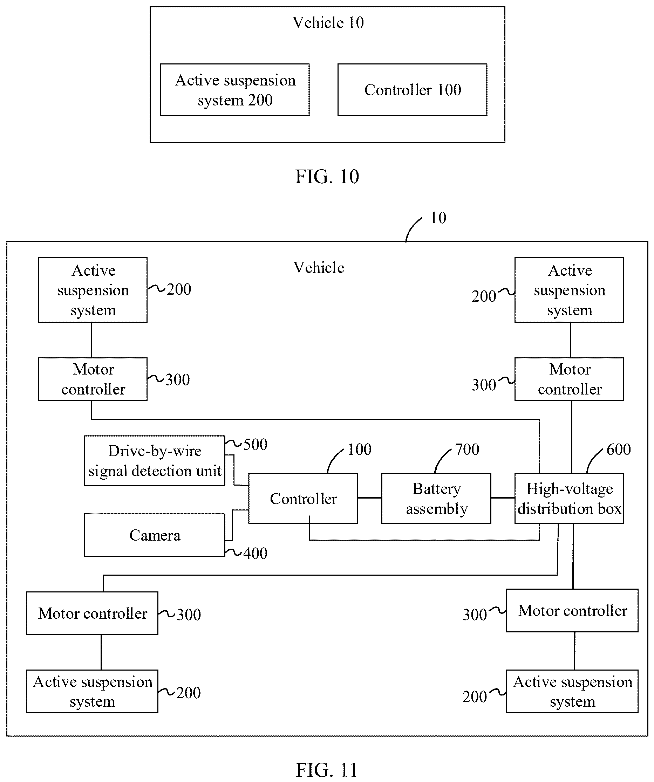

FIG. 10 is a schematic diagram of a structure of a vehicle according to an embodiment of the present disclosure.

As shown in FIG. 10, a vehicle 10 includes the foregoing controller 100 and an active suspension system 200.

An upper portion of the active suspension system 200 can be connected to a vehicle body, and a lower portion of the active suspension system 200 can be connected to a wheel of the vehicle 10 through a frame. There may be four active suspension systems 200.

As an example, as shown in FIG. 11, the vehicle 10 further includes: a motor controller 300 that is connected to the active suspension system 200; a camera 400 configured to collect road surface information; a drive-by-wire signal detection unit 500, including a speed sensor 501 configured to obtain a movement speed of a vehicle, an acceleration sensor 502 configured to obtain an instantaneous acceleration of the vehicle, an angle sensor 503 configured to obtain an angle change amount of a steering wheel, a torque sensor 504 configured to obtain a rotation torque, a first displacement sensor 505 configured to obtain an opening degree of an accelerator pedal, and a second displacement sensor 506 configured to obtain an opening degree of a brake pedal; a high-voltage distribution box 600; a battery assembly 700 connected to the high-voltage distribution box 600; a controller 100 connected to the camera 400, the drive-by-wire signal detection unit 500, the battery assembly 700, and the high-voltage distribution box 600.

Specifically, the drive-by-wire signal detection unit 500 feeds back a real-time monitoring result to the controller 100, and the camera 400 sends a real-time photographed image to the controller 100. The controller 100 analyzes the received data and makes a decision, and then correspondingly allocates high-voltage electricity of the battery assembly 700 to four motor controllers 300 by using the high-voltage distribution box 600. The four motor controllers 300 respectively control corresponding active suspension systems 200, thereby implementing active adjustment of the suspension.

When a charge level of the battery assembly 700 is relatively low, a battery charge level warning mechanism needs to be initiated. Accordingly, control of the active suspension system 200 is suspended.

In this example, the motor controller 300 is directly powered by the battery assembly 700, so that a response speed of the motor controller 300 can be accelerated.

The vehicle in this embodiment of the present disclosure actively adjusts a vehicle body posture by controlling the active suspension system, so that the vehicle can be always in the optimal driving state, ensuring stability of the driver's operation and improving comfort of the passengers.

It will be understood that logic and/or steps represented in a flowchart or described herein in another manner, for example, may be considered as a fixed-order list of executable instructions for implementing a logical function, and may be specifically implemented in any computer-readable medium for use by or in combination with an instruction execution system, apparatus, or device (such as a computer-based system, a system including a processor, or another system that can fetch and execute instructions from an instruction execution system, apparatus, or device). In terms of this specification, the "computer-readable medium" may be any apparatus that may include, store, communicate, propagate, or transmit a program for use by or in combination with an instruction execution system, apparatus, or device. More specific examples (a non-exhaustive list) of the computer-readable medium include the following: an electrical connection part (electronic apparatus) having one or more cables, a portable computer disc box (magnetic apparatus), a random access memory (RAM), a read-only memory (ROM), an erasable programmable read-only memory (EPROM or a flash memory), an optical fiber apparatus, and a compact disc read-only memory (CDROM). In addition, the computer-readable medium may even be a paper or another suitable medium on which the program can be printed, since the program may be electronically obtained, for example, by optically scanning the paper or another medium and then performing editing, interpreting, or processing in another proper manner if necessary, and then the program is stored in a computer memory.

In addition, various parts of the present disclosure may be implemented by hardware, software, firmware, or a combination thereof. In the foregoing implementations, the plurality of steps or methods may be implemented by software or firmware stored in a memory and executed by a proper instruction execution system. For example, if the plurality of steps or methods are implemented by hardware, as in another implementation, the plurality of steps or methods may be implemented by using any one or a combination of the following technologies known in the art: a discrete logic circuit having a logic gate circuit for implementing a logical function for a data signal, an application-specific integrated circuit having a proper combined logic gate circuit, a programmable gate array (PGA), a field programmable gate array (FPGA), and the like.

In the description of this specification, description of reference terms such as "an embodiment", "some embodiments", "an example", "a specific example", or "some examples" mean that specific features, structures, materials, or characteristics described with reference to this embodiment or example are included in at least one embodiment or example of the present disclosure. In this specification, illustrative expressions of the foregoing terms do not necessarily refer to a same embodiment or example. Furthermore, the described specific features, structures, materials, or characteristics may be combined in any one or more embodiments or examples in a suitable manner.

In addition, the terms "first" and "second" are used for a descriptive purpose only and shall not be construed as indicating or implying relative importance or implicitly indicating the quantity of the indicated technical features. Therefore, a feature defined with "first" and "second" may explicitly or implicitly include at least one feature. In the description of the present disclosure, "a plurality of" means at least two, for example, two or three, unless otherwise clearly and specifically limited.

Although the embodiments of the present disclosure have been shown and described above, it will be understood that the foregoing embodiments are examples and cannot be construed as limitations on the present disclosure, and a person of ordinary skill in the art can make changes, modifications, substitutions, or variations on the foregoing embodiments within the scope of this disclosure.

## Claims

1. A vehicle body stability control method, comprising:
obtaining vehicle body state information of a vehicle, and road surface information, the vehicle having an active suspension system; and
controlling the active suspension system based on the vehicle body state information and the road surface information to stabilize the vehicle.

2. The control method according to claim 1, wherein the step of controlling the active suspension system based on the vehicle body state information and the road surface information comprises:
determining a target electromagnetic suspension from the active suspension system based on the vehicle body state information and the road surface information, and obtaining a target control parameter corresponding to the target electromagnetic suspension; and
controlling the corresponding target electromagnetic suspension based on the target control parameter.

3. The control method according to claim 2, wherein the step of determining the target electromagnetic suspension from the active suspension system based on the vehicle body state information and the road surface information, and obtaining the target control parameter corresponding to the target electromagnetic suspension comprises:
determining the target electromagnetic suspension from the active suspension system based on the vehicle body state information; and
determining the target control parameter corresponding to the target electromagnetic suspension based on the road surface information and the vehicle body state information.

4. The control method according to claim 3, wherein the step of determining the target control parameter corresponding to the target electromagnetic suspension based on the road surface information and the vehicle body state information comprises:
obtaining a first control parameter based on the road surface information, and determining a second control parameter based on the vehicle body state information; and
obtaining the target control parameter based on the first control parameter and the second control parameter.

5. The control method according to claim 4, wherein the step of obtaining the first control parameter based on the road surface information comprises:
obtaining the first control parameter when it is determined that the vehicle is driving on an uneven road surface based on the road surface information, the first control parameter representing that the vehicle body of the vehicle is raised to a first preset height by using the active suspension system; and
obtaining the first control parameter when it is determined that the vehicle is driving on a flat road surface based on the road surface information, the first control parameter representing that the vehicle body of the vehicle is lowered to a second preset height by using the active suspension system, wherein the first preset height is greater than the second preset height.

6. The control method according to claim 4 or 5, wherein the step of determining the second control parameter based on the vehicle body state information comprises:
obtaining a first target threshold corresponding to a vehicle speed, the vehicle body state information comprising the vehicle speed and an accelerator pedal signal;
obtaining a first change amount based on the accelerator pedal signal; and
obtaining the second control parameter when the first change amount is greater than the first target threshold, the second control parameter representing lowering a height of a front-wheel electromagnetic suspension and/or raising a height of a rear-wheel electromagnetic suspension to avoid lifting up during acceleration, wherein the active suspension system comprises the front-wheel electromagnetic suspension and the rear-wheel electromagnetic suspension.

7. The control method according to claim 4 or 5, wherein the step of determining the second control parameter based on the vehicle body state information comprises:
obtaining a second target threshold corresponding to a vehicle speed, the vehicle body state information comprising the vehicle speed and a brake pedal signal;
obtaining a second change amount based on the brake pedal signal; and
obtaining the second control parameter when the second change amount is greater than the second target threshold, the second control parameter representing raising a height of a front-wheel electromagnetic suspension and/or lowering a height of a rear-wheel electromagnetic suspension to avoid diving during braking, wherein the active suspension system comprises the front-wheel electromagnetic suspension and the rear-wheel electromagnetic suspension.

8. The control method according to claim 4 or 5, wherein the step of determining the second control parameter based on the vehicle body state information comprises:
obtaining a third target threshold corresponding to a vehicle speed, the vehicle body state information comprising the vehicle speed and a turn signal;
obtaining a third change amount based on the turn signal; and
obtaining the second control parameter when the third change amount is greater than the third target threshold, the second control parameter representing lowering a height of an inner-side electromagnetic suspension and/or raising a height of an outer-side electromagnetic suspension to avoid vehicle body tilt during turning, wherein the active suspension system comprises the inner-side electromagnetic suspension and the outer-side electromagnetic suspension.

9. The control method according to any one of claims 6 to 8, wherein the second control parameter further represents that damping of an electromagnetic suspension is controlled.

10. A controller, comprising a memory, a processor, and a computer program stored in the memory, wherein when the computer program is executed by the processor, the vehicle body stability control method according to any one of claims 1 to 9 is implemented.

11. A vehicle, comprising an active suspension system and the controller according to claim 10.
